# EUROPÄISCHE PATENTSCHRIFT

(11) **EP 3 565 982 B1**
(45) Veröffentlichungstag und Bekanntmachung des Hinweises auf die Patenterteilung: **24.03.2021**
(21) Anmeldenummer: 18701106.9
(22) Anmeldetag: 05.01.2018
(51) Int. Cl.: F16C 29/04, F16C 33/38, F16C 33/40, F16C 33/44, F24C 15/16, A47B 88/49

(54) **WÄLZKÖRPERKÄFIG FÜR EINE TELESKOPSCHIENE ODER EINE LINEARFÜHRUNG**
ROLLING BODY CAGE FOR A TELESCOPIC RAIL OR A LINEAR GUIDE
CAGE À CORPS DE ROULEMENT POUR UN RAIL TÉLESCOPIQUE OU UN GUIDE LINÉAIRE

(30) Priorität: 06.01.2017 DE 202017100040 U
(43) Veröffentlichungstag der Anmeldung: 13.11.2019
(73) Patentinhaber: Accuride International GmbH, 65582 Diez/Lahn (DE)
(72) Erfinder: NEUHAUS, Christoph, 56412 Niederelbert (DE); QUIREIN, Thomas, 65582 Diez (DE)
(74) Vertreter: WSL Patentanwälte Partnerschaft mbB
(86) Internationale Anmeldenummer: PCT/EP2018/050254
(87) Internationale Veröffentlichungsnummer: WO 2018/127555

(56) Entgegenhaltungen:
- EP-A1- 1 902 256
- DE-U1-202008 007 609

## Beschreibung

Die vorliegende Erfindung betrifft einen Wälzkörperkäfig für eine Linearführung oder eine Teleskopschiene mit gegeneinander verfahrbaren Schienenelementen, wobei der Wälzkörperkäfig aufweist wenigstens einen sich in einer Längsrichtung des Wälzkörperkäfigs erstreckenden Bodenabschnitt, auf gegenüberliegenden Seiten des Bodenabschnitts sich von diesem im Wesentlichen senkrecht erstreckende, parallel angeordnete, Seitenwandabschnitte, in denen Wälzkörperhalteausnehmungen für die Aufnahme und das Halten von Wälzkörpern zwischen den Laufbahnen von Schienenelementen vorgesehen sind, und an wenigstens einem ersten Ende des Wälzkörperkäfigs eine Verbindungsbrücke, die sich zwischen den Seitenwandabschnitten und im Wesentlichen senkrecht zu diesen erstreckt, wobei der Bodenabschnitt, die Seitenwandabschnitte und die Verbindungsbrücke einstückig aus einem ersten Kunststoff hergestellt sind.

Wälzkörperkäfige für die Aufnahme und das Halten der Wälzkörper in wälzkörpergelagerten Linearführungen und Teleskopschienen sind in verschiedenster Ausgestaltung aus dem Stand der Technik bekannt. Der Wälzkörperkäfig dient dazu, die Wälzkörper in der Laufbahn zwischen zwei Schienenelementen in einem festen Abstand zueinander zu halten und ein Herausfallen der Wälzkörper aus der Linearführung oder der Teleskopschiene zu verhindern.

Linearführungen und Teleskopschienen bestehen aus wenigstens zwei Schienenelementen, die gegeneinander verfahrbar gelagert sind. Als Linearführung bezeichnet man üblicherweise einen Aufbau aus einem langen Schienenelement und einem auf dem langen Schienenelement verfahrbaren kurzen Schienenelement, das auch als Schlitten bezeichnet wird. Dabei hat das lange Schienenelement im Wesentlichen die Länge des Verfahrwegs zuzüglich der Länge des Schlittens. Teleskopschienen bestehen aus zwei oder mehr gegeneinander verfahrbaren Schienenelementen.

Damit die Schienenelemente wälzkörpergelagerter Linearführungen und Teleskopschienen nicht auseinanderlaufen und sich voneinander trennen, ist ihr Verfahrweg in beiden Verfahrrichtungen üblicherweise durch Endanschläge begrenzt. Die Endanschläge werden häufig durch an den Enden der Außenschiene in Richtung der daran verfahrbar gelagerten Innenschiene aufgebogene Laschen realisiert. Die Begrenzung des Verfahrweges in Einschubrichtung einer Teleskopschiene erfolgt in der Regel dadurch, dass die Innenschiene mit ihrem Ende an die Lasche(n) am Ende der Außenschiene anschlägt. Bei Linearführungen, bei denen ein Schlitten zwischen den beiden Enden einer Außenschiene verfahrbar gelagert ist, kann diese Art des Endanschlages auch an beiden Enden der Außenschiene vorgesehen sein.

Die WO 2006/136481 A1 offenbart eine Teleskopauszugsvorrichtung für ein Hausgerät mit wenigstens zwei Teleskopschienen und mit einem Kugelkäfig zum Lagern von Wälzkörpern, die dazu vorgesehen sind, sich während einer Auszugsbewegung und/oder Einschubbewegung an den Teleskopschienen abzuwälzen. Um eine solche Teleskopauszugsvorrichtung mit einem höheren Bedienkomfort und einer verlängerten Lebensdauer auszustatten, schlägt die WO 2006/136481 A1 vor, den Kugelkäfig unter Umgehung der Wälzkörper als Endanschlag zum Begrenzen der Auszugsbewegung und/oder Einschubbewegung zu verwenden.

Ein Nachteil dieser herkömmlichen Linearführungen und Teleskopschienen besteht darin, dass immer noch Geräusche beim Endanschlag entstehen können. Um diese Geräusche beim Erreichen des Anschlags zu dämpfen sind aus der DE 20 2008 007 609 an den Enden des Wälzkörperkäfigs angeordnete Verbindungsbrücken bekannt, die bei Erreichen eines Endes des Verfahrwegs zwischen dem Endanschlag der Außenschiene und der Innenschiene in Eingriff kommen und ein direktes, deutlich lauteres unmittelbares aufeinanderschlagen der Innenschiene und der Außenschiene verhindern.

Es hat sich jedoch herausgestellt, dass vor allem dann, wenn die mit der Linearführung oder der Teleskopschiene verbundene Einrichtungen einen geeigneten Resonanzkörper bereitstellen, sowohl das Anschlagen der Innenschiene an den Wälzkörperkäfig als auch das Anschlagen des Wälzkörperkäfigs an den Endanschlag der Außenschiene nach wie vor als störend empfundene Geräusche generieren können.

Es ist daher eine Aufgabe der vorliegenden Erfindung diese Anschlagsgeräusche weiter zu reduzieren.

Gelöst wird diese Aufgabe durch einen Wälzkörperkäfig der eingangsgenannten Art, bei dem die Verbindungsbrücke zumindest auf zwei einander gegenüberliegenden Stirnflächen von einem Dämpfungselement aus einem zweiten Kunststoff umgeben ist, wobei der zweite Kunststoff weicher ist als der erste Kunststoff und wobei der zweite Kunststoff eine Shore-Härte in einem Bereich von 40 Shore-A bis 90 Shore-A aufweist.

Wenn im Zusammenhang mit der vorliegenden Anmeldung von einer Außenschiene oder einer Innenschiene die Rede ist, so bezeichnet dies herkömmliche, aus dem Stand der Technik bekannte Schienenelemente mit im wesentlichen C-förmigem Querschnittsprofil, wobei die Laufbahnen für die Wälzkörper an den jeweiligen Endabschnitten bzw. Schenkeln des C-förmigen Profils ausgebildet sind. Bei der Außenschiene sind die Laufbahnen auf den einander zugewandten Innenflächen der Schenkel bzw. Endabschnitte des C-förmigen Profils angeordnet, so dass die Laufbahnen der Außenschiene das Wälzkörperlager mit dem Wälzkörperkäfig im Wesentlichen umgreifen. Bei der Innenschiene sind die Laufbahnen für die Wälzkörper auf den nach außen gerichteten Seiten der Endabschnitte bzw. Schenkel des C-förmigen Profils angeordnet. Die Innenschiene verläuft wenigstens teilweise innerhalb des von den Endabschnitten bzw. Schenkeln des C-förmigen Profils der Außenschiene umgriffenen Bereichs.

Unter einem Wälzkörper im Sinne der vorliegenden Anmeldung wird ein Rotationskörper beispielsweise aus Stahl, Keramik oder Kunststoff verstanden, der als Element einer Führung die Reibung zwischen den verschiedenen Schienen erheblich reduziert und damit eine relative Bewegung zweier Schienen zueinander erleichtert. Wälzkörper sind beispielsweise Kugeln, Rollen, Tonnen, Nadeln oder Kegel.

Sind in einer Ausführungsform der Erfindung die Wälzkörper Kugeln, so ist der Wälzkörperkäfig in diesem Fall ein Kugelkäfig.

Die Wälzkörper werden an dem Wälzkörperkäfig in den in den Seitenwandabschnitten eingebrachten Halteausnehmungen aufgenommen.

Der Wälzkörperkäfig besteht aus wenigstens einem Bodenabschnitt, der im Wesentlichen die Breite des Kugelkäfigs bestimmt. Von diesem Bodenabschnitt erstrecken sich im Wesentlichen senkrecht und parallel zueinander Seitenwandabschnitte mit Durchgangsöffnungen, welche in der vorliegenden Anmeldung als Wälzkörperhalteausnehmungen bezeichnet werden.

Die Seitenwandabschnitte sind in einer Ausführungsform streifenförmig. Die Seitenwandabschnitte können sich in Längsrichtung des Wälzkörperkäfigs von einem Ende bis zum anderen Ende erstrecken. Sie können jedoch auch als mehrere kürzere Abschnitte mit Unterbrechungen dazwischen ausgebildet sein.

Die Verbindungsbrücke verbindet an einem ersten Ende des Wälzkörperkäfigs die beiden Seitenwandabschnitte und erstreckt sich im Wesentlichen ebenfalls senkrecht zu diesen. Die Verbindungsbrücke kann als Steg stabförmig oder bandförmig zwischen den Seitenwandabschnitten des Wälzkörperkäfigs ausgebildet sein. Zudem ist in einer Ausführungsform die Verbindungsbrücke im Wesentlichen senkrecht zum Bodenabschnitt.

Der Bodenabschnitt, die Seitenwandabschnitte und die Verbindungsbrücke sind einstückig aus einem ersten Kunststoff hergestellt. Es versteht sich, dass dies vorzugsweise durch Spritzgießen erfolgt. In einer Ausführungsform der Erfindung ist dieser erste Kunststoff Polyoxymetylen (POM) oder Polyamid (PA, vorzugsweise Polyamid 6.6).

Auf diese Weise lassen sich der Bodenabschnitt, die Seitenwandabschnitte und die Verbindungsbrücke einfach und kostengünstig mit der erforderlichen Präzision herstellen.

Erfindungsgemäß ist die Verbindungsbrücke zumindest auf zwei einander gegenüberliegenden Stirnflächen von einem Dämpfungselement aus einem zweiten Kunststoff umgeben, wobei der zweite Kunststoff weicher ist als der erste Kunststoff. Dieses Dämpfungselement dämpft im eingebauten Zustand des Wälzkörperkäfigs zum einen den Anschlag des Wälzkörperkäfigs an die Außenschiene einer Linearführung oder Teleskopschiene und zum anderen den Anschlag des Wälzkörperkäfigs an eine Innenschiene. Um die notwendige Dämpfung und damit Geräuschreduzierung beim Anschlag zu erzielen, ist der zweite Kunststoff des Dämpfungselements weicher als der erste Kunststoff der Verbindungsbrücke.

In einer Ausführungsform der Erfindung weist der zweite Kunststoff eine Shore-Härte von 80 Shore-A oder weniger, vorzugsweise von 70 Shore-A oder weniger und besonders bevorzugt von 60 Shore-A oder weniger auf.

Ein Kunststoff mit einer derartigen Shore-Härte stellt die erforderliche akustische Dämpfung zur Verfügung.

Der Kunststoff weist eine Shore-Härte von 40 Shore-A oder mehr auf. Ein Kunststoff mit einer Shore-Härte von 40 Shore-A oder mehr besitzt die notwendige Zähigkeit, um auch über eine Vielzahl von Betätigungszyklen nicht durch die Schienen, welche mit dem Dämpfungselement in Eingriff kommen, beschädigt zu werden.

Als kritisch hat sich herausgestellt, dass ein Dämpfungselement, welches der Dämpfung eines Anschlags des Wälzkörperkäfigs sowohl an der Außenschiene als auch an der Innenschiene dient, auch die Anschlagsposition der Innenschiene relativ zur Außenschiene definiert. Dadurch, dass das zweite Kunststoffmaterial weich ist, verringert das Dämpfungselement auch die Präzision der Anschlagsposition. Um die Anschlagsposition dennoch innerhalb der erforderlichen Toleranzen halten zu können, weist der zweite Kunststoff des Dämpfungselements auf jeder der Stirnflächen der Verbindungsbrücke jeweils eine Dicke in einem Bereich von 0,8 mm bis 1,6 mm, vorzugsweise in einem Bereich von 1 mm bis 1,5 mm auf.

Grundsätzlich kann das Dämpfungselement entweder zweistückig mit dem Bodenabschnitt, den Seitenwandabschnitten und der Verbindungsbrücke ausgestaltet sein oder aber einstückig zusammen mit diesen durch Mehrkomponenten-Spritzgießen hergestellt sein.

Beim Zweikomponenten-Spritzgießen gehen in einer Ausführungsform der zweite Kunststoff des Dämpfungselements und der erste Kunststoff der Verbindungsbrücke eine Verbindung derart miteinander ein, dass die beiden Kunststoffe miteinander verschweißen.

Dennoch kann es in einer Ausführungsform, insbesondere in Ausführungsformen, in denen es nicht zu einem Verschweißen der beiden Kunststoffe kommt, zweckmäßig sein, wenn der zweite Kunststoff die Verbindungsbrücke derartig umgibt, dass sich eine Verliersicherung bereitgestellt wird.

In einer Ausführungsform der Erfindung ist daher die Verbindungsbrücke als streifenförmiger Wandabschnitt ausgebildet und es ist abschnittsweise zwischen diesem streifenförmigen Wandabschnitt und dem Bodenabschnitt eine Durchbrechung vorgesehen, wobei der zweite Kunststoff des Dämpfungselements den Bereich zwischen dem streifenförmigen Wandabschnitt der Verbindungsbrücke und dem Bodenabschnitt ausfüllt, sodass das Dämpfungselement verliersicher an der Verbindungsbrücke befestigt ist.

In einer weiteren Ausführungsform weist die Verbindungsbrücke selbst mindestens eine Durchbrechung auf, wobei der zweite Kunststoff des Dämpfungselements die Durchbrechung ausfüllt, sodass das Dämpfungselement verliersicher an der Verbindungsbrücke befestigt ist.

In einer alternativen Ausführungsform, in welcher die Elemente des Wälzkörperkäfigs aus dem ersten Kunststoff und das Dämpfungselement aus dem zweiten Kunststoff nicht durch zwei-Komponenten-Spritzgießen hergestellt werden, sondern zweiteilig ausgestaltet sind, weist das Dämpfungselement beispielsweise ein Rastelement auf und die Verbindungsbrücke eine Ausnehmung, wobei das Rastelement in die Ausnehmung eingreift, sodass das Dämpfungselement verliersicher an der Verbindungsbrücke aufgenommen ist.

Es versteht sich, dass in einer Ausführungsform der Erfindung sowohl an dem ersten Ende als auch an dem zweiten Ende der Seitenwandabschnitte jeweils eine Verbindungsbrücke vorgesehen ist, die sich zwischen den Seitenwandabschnitten erstreckt, wobei jede der Verbindungsbrücken zumindest auf zwei einander gegenüberliegenden Stirnflächen von einem Dämpfungselement aus dem zweiten Kunststoff umgeben ist. Auf diese Weise kann die oben beschriebene Funktionalität auf beiden Seiten, das heißt an beiden Anschlägen einer Linearführung bereitgestellt werden.

Zumindest eine der oben genannten Aufgaben wird auch durch eine Linearführung oder Teleskopschiene mit einer Außenschiene, einer Innenschiene, einem Wälzkörperkäfig, so wie er zuvor in Ausführungsformen davon beschrieben wurde und in den Wälzkörperhalteausnehmungen aufgenommenen Wälzkörpern gelöst, wobei die Außenschiene und die Innenschiene mittels der von dem Wälzkörperkäfig gehaltenen Wälzkörper gegeneinander verfahrbar gelagert sind, wobei an wenigstens einem Ende der Außenschiene ein Endanschlag vorgesehen ist, der den Verfahrweg des Wälzkörperkäfigs entlang der Außenschiene durch Anschlag des Dämpfungselements an dem Endanschlag begrenzt, und wobei wenigstens an einem dem Endanschlag zugewandten Ende der Innenschiene ein Anschlag vorgesehen ist, der den Verfahrweg des Wälzkörperkäfigs entlang der Innenschiene durch Anschlag des Dämpfungselements an dem Anschlag der Innenschiene begrenzt.

In einer Ausführungsform ist der Endanschlag an dem Ende der Außenschiene aus einer aus dem Material der Außenschiene aufgebogenen oder an diese angeformte Lasche ausgebildet. Dieser Endanschlag, vorzugsweise die aufgebogene oder angeformte Lasche am Ende der Außenschiene, tritt zur Begrenzung des Verfahrwegs mit dem Dämpfungselement an der Verbindungsbrücke am Ende des Wälzkörperkäfigs in Eingriff. Der Kugelkäfig kann dann nicht weiter verfahren werden.

Die Bewegung der Innenschiene in Verfahrrichtung wird dadurch begrenzt, dass ein Anschlag der Innenschiene von innen mit dem Dämpfungselement auf der Verbindungsbrücke am Ende des Kugelkäfigs in Eingriff kommt.

Es versteht sich, dass der Anschlag der Innenschiene in einer Ausführungsform von einem Ende der Seitenwandabschnitte der Innenschiene gebildet wird.

Entscheidend für das Funktionieren der erfindungsgemäßen Lösung ist, dass bei Erreichen des Anschlags die Innenschiene und die Außenschiene weder unmittelbar miteinander noch mit dem ersten Kunststoffmaterial des Wälzkörperkäfigs, sondern nur mit dem Dämpfungselement in Kontakt kommen.

In einer Ausführungsform der Erfindung sind an beiden Enden der Außenschiene Endanschläge an beiden Enden der Innenschiene Anschläge und an beiden Enden des Wälzkörperkäfigs Verbindungsbrücken mit Dämpfungselementen vorgesehen.

Weitere Vorteile, Merkmale und Ausgestaltungen der vorliegenden Erfindung werden anhand der nachfolgenden Beschreibung einer Ausführungsform und der dazugehörigen Figuren deutlich.
Figur 1 ist eine perspektivische Darstellung eines erfindungsgemäßen Wälzkörperkäfigs von schräg oben.
Figur 2 ist eine Draufsicht von unten auf den Wälzkörperkäfig aus Figur 1.
Figur 3 ist eine Draufsicht von oben auf den Wälzkörperkäfig aus Figuren 1 und 2.
Figur 4 ist eine perspektivische Darstellung von schräg oben auf eine Linearführung mit dem erfindungsgemäßen Wälzkörperkäfig aus den Figuren 1 bis 3.

In den Figuren sind identische Elemente mit identischen Bezugszeichen bezeichnet.

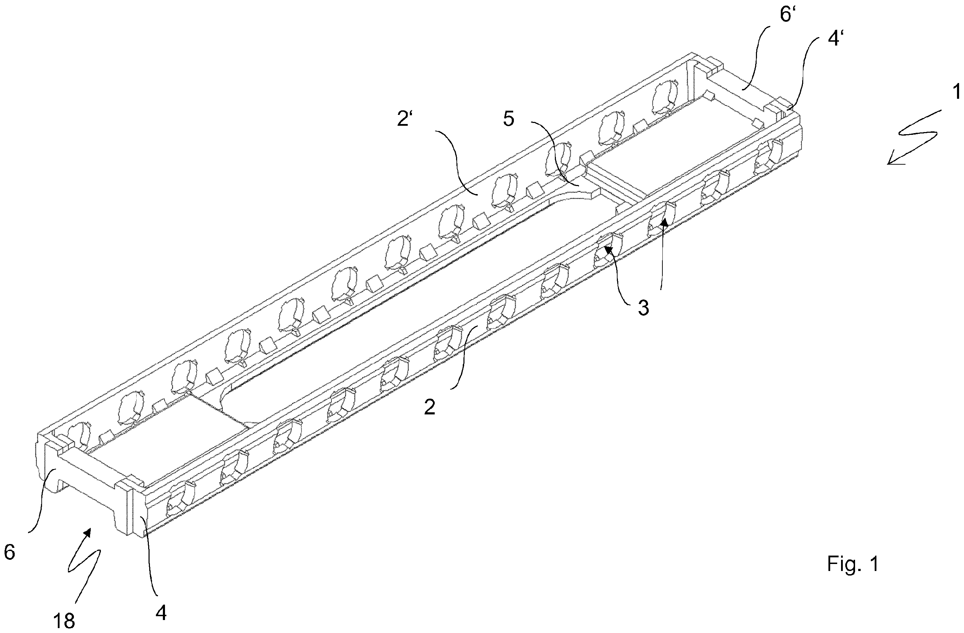

Figur 1 zeigt eine perspektivische Ansicht eines Kugelkäfigs 1 als Wälzkörperkäfig im Sinne der vorliegenden Anmeldung. Dieser Kugelkäfig 1 besteht aus zwei Kunststoffmaterialien, nämlich einem ersten Kunststoffmaterial für den Bodenabschnitt 5, die Seitenwandabschnitte 2, 2' sowie Verbindungsbrücke 4, 4' und einem zweiten, verglichen mit dem ersten Kunststoff, weicheren Kunststoff für die Dämpfungselemente 6, 6'.

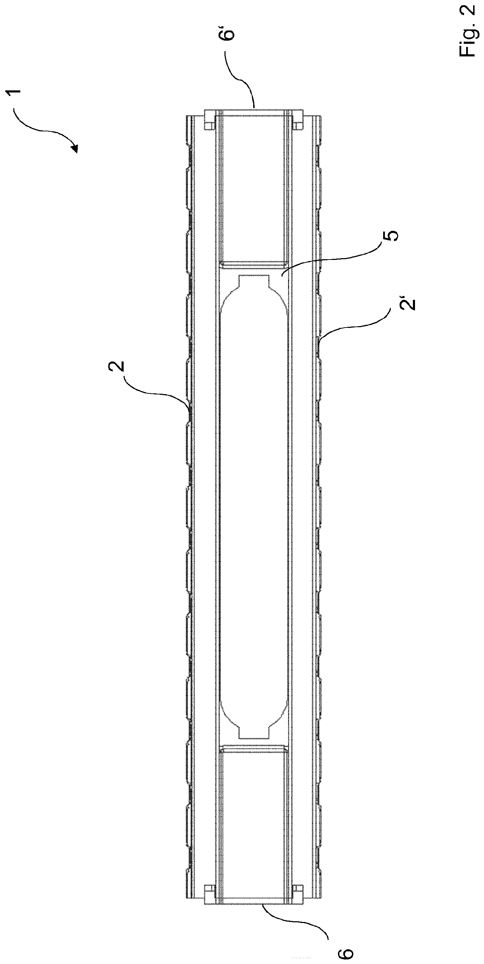

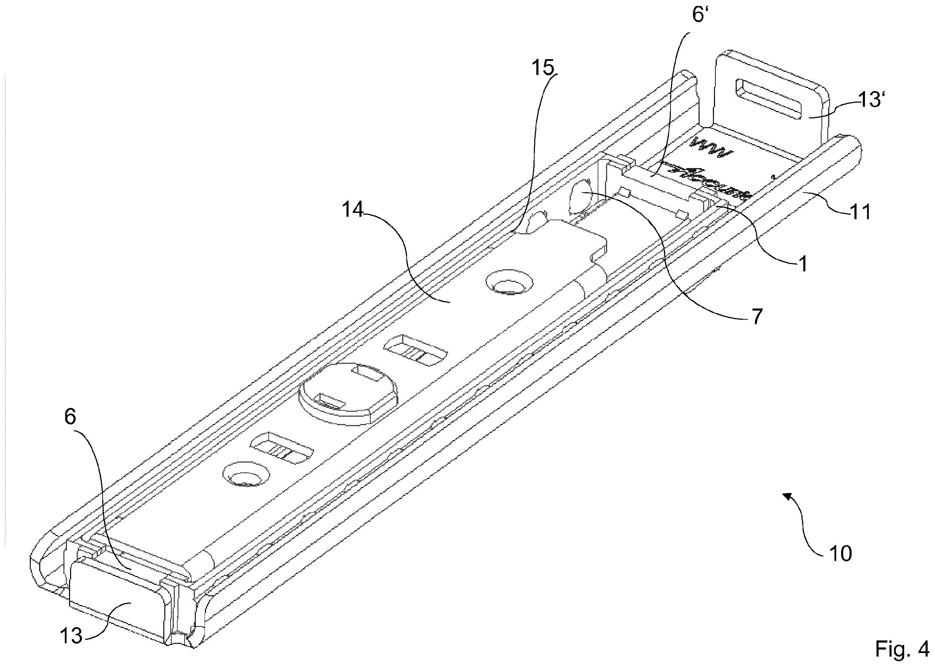

Die Seitenwandabschnitte 2, 2' sind streifenförmig und erstrecken sich in Längsrichtung sowohl senkrecht zum Bodenabschnitt 5 als auch senkrecht zu den Verbindungsbrücken 4, 4'. In jeder der Seitenwandabschnitte 2, 2' sind eine Vielzahl von Kugelhalteausnehmungen 3 vorgesehen, die zur Aufnahme von Lagekugeln 7 dienen. Bei den Kugelhalteausnehmungen 3 handelt es sich in der gezeigten Ausführungsform um Durchbrechungen in den Seitenwandabschnitten 2, 2'. In der Ansicht aus Figur 4, welche eine Linearführung 10 mit einer Außenschiene 11, einer Innenschiene 14 und einem Kugelkäfig 1 aus den Figuren 1-3 zeigt, sind die in den Durchbrechungen der Seitenwandabschnitte 2, 2' aufgenommenen Lagerkugeln mit dem Bezugszeichen 7 bezeichnet.

Der Kugelkäfig 1 weist an seinen beiden Enden jeweils eine Verbindungsbrücke 4, 4' auf, welche die Seitenwandabschnitte 2, 2' miteinander verbinden und aus dem gleichen Material gefertigt sind. Die Verbindungsbrücken 4, 4' kämen, wenn sie nicht von den Dämpfungselementen 6, 6' umgeben wären, mit den in Figur 4 gezeigten Endanschlägen 13, 13' der Außenschiene 11, aber auch mit den Enden der Innenschiene 14 unmittelbar in Kontakt. Diese Enden bilden im Sinne der vorliegenden Anmeldung einen Anschlag der Innenschiene 14 und sind in Figur 4 mit dem Bezugszeichen 15 bezeichnet.

Da die Verbindungsbrücken 4, 4' von jeweils einem Dämpfungselement 6, 6' umgeben sind, wobei der Kunststoff der Dämpfungselemente 6, 6' weicher ist als der Kunststoff der Verbindungsbrücke 4, 4' wird erfindungsgemäß der Anschlag akustisch gedämpft. Entscheidend für das Funktionieren des Dämpfungselements 6, 6' ist, dass dieses sich auf beiden Stirnflächen 16, 16' sowie 17, 17' die Verbindungsbrücken 4, 4' erstreckt, sodass das Dämpfungselement 6, 6' sowohl mit dem Endanschlag 13, 13' der Außenschiene 11 als auch mit dem Anschlag 15 der Innenschiene 14 in Eingriff kommt.

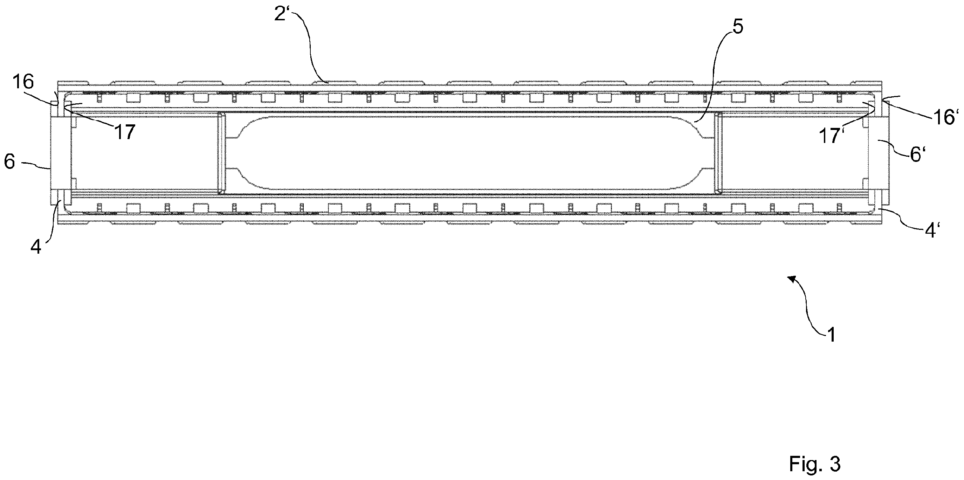

Figur 3 zeigt, dass der Kunststoff des Dämpfungselements 6, 6' auf jeder der Stirnflächen 16, 16', 17, 17' eine Dicke von nur 1,2 mm aufweist. Auf diese Weise wird die Anschlagsposition der Innenschiene 14 relativ zur Außenschiene 11 innerhalb eines vorgegebenen Toleranzbereichs definiert, während gleichzeitig eine ausreichende Dämpfung bewirkt wird.

In der gezeigten Ausführungsform ist der Kunststoff des Dämpfungselements 6, 6' im Zweikomponenten-Spritzgießverfahren um den Kunststoff der Verbindungsbrücken 4, 4' herumgespritzt, sodass der zweite Kunststoff die Verbindungsbrücke 4, 4' vollständig umschließt. Die Verbindungsbrücken 4, 4' sind daher nicht unmittelbar an den Bodenabschnitt 5 angespritzt, sondern zwischen den Verbindungsbrücken 4, 4' ist eine Durchbrechung 18 vorgesehen, durch welche hindurch sich der Kunststoff des Dämpfungselements (6, 6') erstreckt. Daher wird eine hohe Verliersicherheit der Dämpfungselemente 6, 6' bereitgestellt, die nicht nur auf einem Verschweißen des ersten und des zweiten Kunststoffs, sondern auch auf einer mechanischen Hinterschneidung der Verbindungsbrücken 4, 4' durch den Kunststoff der Dämpfungselemente 6, 6' beruht.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Kugelkäfig
- 2, 2': Seitenwandabschnitte
- 3: Wälzkörperhalteausnehmung
- 4, 4': Verbindungsbrücke
- 5: Bodenabschnitt
- 6, 6': Dämpfungselemente
- 7: Lagerkugeln
- 10: Teleskopschiene
- 11: Außenschiene
- 13, 13': Endanschläge
- 14: Innenschiene
- 15: Anschlag der Innenschiene
- 16, 16': Stirnflächen
- 17, 17': Stirnflächen
- 18: Durchbrechung zwischen Verbindungsbrücke und Bodenabschnitt 5

## Patentansprüche

1. Wälzkörperkäfig (1) für eine Linearführung oder Teleskopschiene (10) mit gegeneinander verfahrbaren Schienenelementen (11, 14), wobei der Wälzkörperkäfig (1) aufweist
wenigstens einen sich in einer Längsrichtung des Wälzkörperkäfigs (1) erstreckenden Bodenabschnitt (5),
auf gegenüberliegenden Seiten des Bodenabschnitts (5) sich von diesem im Wesentlichen senkrecht erstreckende, parallel angeordnete, Seitenwandabschnitte (2, 2'), in denen Wälzkörperhalteausnehmungen (3) für die Aufnahme und das Halten von Wälzkörpern (7) zwischen den Laufbahnen von Schienenelementen (11, 14) vorgesehen sind, und
an wenigstens einem ersten Ende des Wälzkörperkäfigs (1) eine Verbindungsbrücke (4, 4'), die sich zwischen den Seitenwandabschnitten (2, 2') und im Wesentlichen senkrecht zu diesen erstreckt,
wobei der Bodenabschnitt (5), die Seitenwandabschnitte (2, 2') und die Verbindungsbrücke (4, 4') einstückig aus einem ersten Kunststoff hergestellt sind,
**dadurch gekennzeichnet, dass**
die Verbindungsbrücke (4, 4') zumindest auf zwei einander gegenüberliegenden Stirnflächen (16, 16', 17, 17') von einem Dämpfungselement (6, 6') aus einem zweiten Kunststoff umgeben ist,
wobei der zweite Kunststoff weicher ist als der erste Kunststoff und
wobei der zweite Kunststoff eine Shore-Härte in einem Bereich von 40 Shore-A bis 90 Shore-A aufweist.

2. Wälzkörperkäfig (1) nach Anspruch 1, **dadurch gekennzeichnet, dass** der zweite Kunststoff eine Shore-Härte von 80 Shore-A oder weniger und besonders bevorzugt von 70 Shore-A oder weniger aufweist.

3. Wälzkörperkäfig (1) nach einem der vorhergehenden Ansprüche, **dadurch gekennzeichnet, dass** der erste Kunststoff Polyoxymethylen oder Polyamid, vorzugsweise Polyamid 6.6, umfasst und/oder der zweite Kunststoff Polyurethan umfasst.

4. Wälzkörperkäfig (1) nach einem der vorhergehenden Ansprüche, **dadurch gekennzeichnet, dass** der zweite Kunststoff des Dämpfungselments (6, 6') auf jeder der Stirnflächen (16, 16', 17, 17') der Verbindungsbrücke (4, 4') jeweils eine Dicke in einem Bereich von 0,8 mm bis 1,6 mm, vorzugsweise in einem Bereich von 1,00 mm bis 1,5 mm aufweist.

5. Wälzkörperkäfig (1) nach einem der vorhergehenden Ansprüche, **dadurch gekennzeichnet, dass** der Bodenabschnitt (5), die Seitenwandabschnitte (2, 2') und die Verbindungsbrücke (4, 4') einerseits und die das Dämpfungselement (6, 6') andererseits durch Mehrkomponenten-Spritzgießen hergestellt sind.

6. Wälzkörperkäfig (1) nach einem der vorhergehenden Ansprüche, **dadurch gekennzeichnet, dass** die Verbindungsbrücke (4, 4') als streifenförmiger Wandabschnitt ausgebildet ist und zumindest abschnittsweise dem streifenförmigen Wandabschnitt und dem Bodenabschnitt (5) eine Durchbrechung (18) vorgesehen ist, wobei der zweite Kunststoff des Dämpfungselements (6, 6') die Durchbrechung (18) zwischen Verbindungsbrücke (4, 4') und Bodenabschnitt (5) ausfüllt, so dass das Dämpfungselement (6, 6') verliersicher an der Verbindungsbrücke (4, 4') befestigt ist.

7. Wälzkörperkäfig (1) nach einem der vorhergehenden Ansprüche, **dadurch gekennzeichnet, dass** die Verbindungsbrücke (4, 4') mindestens eine Durchbrechung (18) aufweist, wobei der zweite Kunststoff des Dämpfungselements (6, 6') die Durchbrechung (18) ausfüllt, so dass das Dämpfungselement (6, 6') verliersicher an der Verbindungsbrücke (4, 4') befestigt ist.

8. Wälzkörperkäfig (1) nach einem der vorhergehenden Ansprüche, **dadurch gekennzeichnet, dass** das Dämpfungselement (6, 6') ein Rastelement aufweist und die Verbindungsbrücke (4, 4') eine Ausnehmung aufweist, wobei das Rastelement in die Ausnehmung eingreift, so dass das Dämpfungselement (6, 6') verliersicher an der Verbindungsbrücke (4, 4') befestigt ist.

9. Wälzkörperkäfig (1) nach einem der vorhergehenden Ansprüche, **dadurch gekennzeichnet, dass** an einem ersten Ende und an einem zweiten Ende der Seitenwandabschnitte (2, 2') jeweils eine Verbindungsbrücke (4, 4') vorgesehen ist, die sich zwischen den Seitenwandabschnitten (2, 2') erstreckt, wobei jede der Verbindungsbrücken (4, 4') zumindest auf zwei einander gegenüberliegenden Stirnflächen (16, 16', 17, 17') von einem Dämpfungselement (6, 6') aus dem zweiten Kunststoff umgeben ist.

10. Linearführung oder Teleskopschiene (10) mit
einer Außenschiene (11), einer Innenschiene (14), einem Wälzkörperkäfig (1) nach einem der vorhergehenden Ansprüche und in den Wälzkörperhalteausnehmungen (3) aufgenommenen Wälzkörpern (7),
wobei die Au ßenschiene (11) und die Innenschiene (14) mittels der von dem Wälzkörperkäfig (1) gehaltenen Wälzkörper (7) gegeneinander verfahrbar gelagert sind, wobei an wenigstens einem Ende der Au ßenschiene (11) ein Endanschlag (13, 13') vorgesehen ist, der den Verfahrweg des Wälzkörperkäfigs (1) entlang der Außenschiene (11) durch Anschlag des Dämpfungselements (6, 6') an dem Endanschlag (13, 13') begrenzt,
wobei wenigstens an einem dem Endanschlag (13, 13') zugewandten Ende der Innenschiene (14) ein Anschlag (15) vorgesehen ist, der den Verfahrweg des Wälzkörperkäfigs (1) entlang der Innenschiene (14) durch Anschlag des Dämpfungselements (6, 6') an dem Anschlag (15) der Innenschiene (14) begrenzt.

11. Linearführung oder Teleskopschiene (10) dem vorhergehenden Anspruch, **dadurch gekennzeichnet, dass** an beiden Enden der Außenschiene (11) Endanschläge (13, 13'), an beiden Enden der Innenschiene (14) Anschläge (15) und an beiden Enden des Wälzkörperkäfigs (1) Verbindungsbrücken (4, 4') mit Dämpfungselementen (6, 6') vorgesehen sind.

## Claims

1. A rolling body cage (1) for a linear guide or telescopic rail (10) having rail elements (11, 14) which are displaceable relative to each other, wherein the rolling body cage (1) has
at least one bottom portion (5) extending in a longitudinal direction of the rolling body cage (1),
side wall portions (2, 2') which are arranged parallel and which extend on mutually opposite sides of the bottom portion (5) substantially perpendicularly therefrom and in which there are provided rolling body holding recesses (3) for receiving and holding rolling bodies (7) between the raceways of rail elements (11, 14), and
at at least a first end of the rolling body cage (1) a connecting bridge (4, 4') which extends between the side wall portions (2, 2') substantially perpendicularly thereto,
wherein the bottom portion (5), the side wall portions (2, 2') and the connecting bridge (4, 4') are produced in one piece from a first plastic, **characterised in that**
the connecting bridge (4, 4') is surrounded at least on two mutually opposite end faces (16, 16', 17, 17') by a damping element (6, 6') comprising a second plastic,
wherein the second plastic is softer than the first plastic and
wherein the second plastic is of a Shore hardness in a range of 40 Shore-A to 90 Shore-A.

2. A rolling body cage (1) according to claim 1 **characterised in that** the second plastic is of a Shore hardness of 80 Shore-A or less and particularly preferably 70 Shore-A or less.

3. A rolling body cage (1) according to one of the preceding claims **characterised in that** the first plastic includes polyoxymethylene or polyamide, preferably polyamide 6, 6 and/or the second plastic includes polyurethane.

4. A rolling body cage (1) according to one of the preceding claims **characterised in that** the second plastic of the damping element (6, 6') on each of the end faces (16, 16', 17, 17') of the connecting bridge (4, 4') is of a respective thickness in a range of 0.8 mm to 1.6 mm, preferably in a range of 1.00 mm to 1.5 mm.

5. A rolling body cage (1) according to one of the preceding claims **characterised in that** the bottom portion (5), the side wall portions (2, 2') and the connecting bridge (4, 4') on the one hand and the damping element (6, 6') on the other hand are produced by multi-component injection moulding.

6. A rolling body cage (1) according to one of the preceding claims **characterised in that** the connecting bridge (4, 4') is in the form of a strip-shaped wall portion and provided at least portion-wise between the strip-shaped wall portion and the bottom portion (5) is an opening (18), wherein the second plastic of the damping element (6, 6') fills the opening (18) between the connecting bridge (4, 4') and the bottom portion (5) so that the damping element (6, 6') is captively secured to the connecting bridge (4, 4').

7. A rolling body cage (1) according to one of the preceding claims **characterised in that** the connecting bridge (4, 4') has at least one opening (18), wherein the second plastic of the damping element (6, 6') fills the opening (18) so that the damping element (6, 6') is captively secured to the connecting bridge (4, 4').

8. A rolling body cage (1) according to one of the preceding claims **characterised in that** the damping element (6, 6') has a latching element and the connecting bridge (4, 4') has an aperture, wherein the latching element engages into the aperture so that the damping element (6, 6') is captively secured to the connecting bridge (4, 4').

9. A rolling body cage (1) according to one of the preceding claims **characterised in that** provided at a first end and at a second end of the side wall portions (2, 2') is a respective connecting bridge (4, 4') extending between the side wall portions (2, 2'), wherein each of the connecting bridges (4, 4') at least on two mutually opposite end faces (16, 16', 17, 17') is surrounded by a damping element (6, 6') comprising the second plastic.

10. A linear guide or telescopic rail (10) comprising an outer rail |(11), an inner rail (14), a rolling body cage (1) according to one of the preceding claims and rolling bodies (7) received in the rolling body holding recesses (3),
wherein the outer rail (11) and the inner rail (14) are mounted displaceably relative to each other by means of the rolling bodies (7) held by the rolling body cage (1),
wherein provided at at least one end of the outer rail (11) is an end abutment (13, 13') which limits the displacement of the rolling body cage (1) along the outer rail (11) by contact of the damping element (6, 6') against the end abutment (13, 13'),
wherein provided at least at an end of the inner rail (14), that is towards the end abutment (13, 13'), is an abutment (15) which limits the displacement travel of the rolling body cage (1) along the inner rail (14) by contact of the damping element (6, 6') against the abutment (15) of the inner rail (14).

11. A linear guide or telescopic rail (10) according to the preceding claim **characterised in that** provided at both ends of the outer rail (11) are end abutments (13, 13'), provided at both ends of the inner rail (14) are abutments (15) and provided at both ends of the rolling body cage (1) are connecting bridges (4, 4') with damping elements (6, 6').

## Revendications

1. Cage à corps de roulement (1) pour un guide linéaire ou rail télescopique (10) doté d'éléments de rail (11, 14) déplaçables l'un par rapport à l'autre, la cage à corps de roulement (1) comprenant
au moins une partie de fond (5) s'étendant dans une direction longitudinale de la cage à corps de roulement (1),
des parties de paroi latérale (2, 2') disposées parallèlement sur des faces opposées de la partie de fond (5) et s'étendant de manière sensiblement perpendiculaire à celle-ci, dans lesquelles sont prévus des évidements de retenue de corps de roulement (3) pour la réception et le maintien de corps de roulement (7) entre les voies de roulement d'éléments de rail (11, 14), et
au moins à une première extrémité de la cage à corps de roulement (1), un pont de liaison (4, 4') qui s'étend entre les parties de paroi latérale (2, 2') et de manière sensiblement perpendiculaire à celles-ci,
la partie de fond (5), les parties de paroi latérale (2, 2') et le pont de liaison (4, 4') étant réalisés d'une seule pièce dans une première matière plastique,
**caractérisée en ce que**
le pont de liaison (4, 4') est entouré, au moins sur deux faces frontales (16, 16', 17, 17') mutuellement opposées, d'un élément d'amortissement (6, 6') réalisé dans une seconde matière plastique,
la seconde matière plastique étant plus tendre que la première matière plastique, et
la seconde matière plastique ayant une dureté shore comprise entre 40 shore A et 90 shore A.

2. Cage à corps de roulement (1) selon la revendication 1, **caractérisée en ce que** la seconde matière plastique présente une dureté shore de 80 shore A ou moins et, de manière particulièrement préférée, de 70 shore A ou moins.

3. Cage à corps de roulement (1) selon l'une des revendications précédentes, **caractérisée en ce que** la première matière plastique comprend du polyoxyméthylène ou du polyamide, de préférence du polyamide 6.6 et/ou la seconde matière plastique comprend du polyuréthane.

4. Cage à corps de roulement (1) selon l'une des revendications précédentes, **caractérisée en ce que** la seconde matière plastique de l'élément d'amortissement (6, 6') présente, sur chacune des faces frontales (16, 16', 17, 17') du pont de liaison (4, 4'), respectivement une épaisseur comprise entre 0,8 mm et 1,6 mm, de préférence comprise entre 1,00 mm et 1,5 mm.

5. Cage à corps de roulement (1) selon l'une des revendications précédentes, **caractérisée en ce que** la partie de fond (5), les parties de paroi latérale (2, 2') et le pont de liaison (4, 4') d'une part, et l'élément d'amortissement (6, 6') d'autre part sont réalisés par moulage par injection à multi-composants.

6. Cage à corps de roulement (1) selon l'une des revendications précédentes, **caractérisée en ce que** le pont de liaison (4, 4') est réalisé en tant que partie de paroi en forme de bande et une ouverture (18) est prévue au moins en partie entre la partie de paroi en forme de bande et la partie de fond (5), la seconde matière plastique de l'élément d'amortissement (6, 6') remplissant l'ouverture (18) entre le pont de liaison (4, 4') et la partie de fond (5) de sorte que l'élément d'amortissement (6, 6') est fixé de manière imperdable sur le pont de liaison (4, 4').

7. Cage à corps de roulement (1) selon l'une des revendications précédentes, **caractérisée en ce que** le pont de liaison (4, 4') présente au moins une ouverture (18), la seconde matière plastique de l'élément d'amortissement (6, 6') remplissant l'ouverture (18) de sorte que l'élément d'amortissement (6, 6') est fixé de manière imperdable sur le pont de liaison (4, 4').

8. Cage à corps de roulement (1) selon l'une des revendications précédentes, **caractérisée en ce que** l'élément d'amortissement (6, 6') comporte un élément d'encliquetage et le pont de liaison (4, 4') présente un évidement, l'élément d'encliquetage venant en prise dans l'évidement de sorte que l'élément d'amortissement (6, 6') est fixé sur le pont de liaison (4, 4') de manière imperdable.

9. Cage à corps de roulement (1) selon l'une des revendications précédentes, **caractérisée en ce qu'**est prévu respectivement à une première extrémité et à une seconde extrémité des parties de paroi latérale (2, 2') un pont de liaison (4, 4') qui s'étend entre les parties de paroi latérale (2, 2'), chacun des ponts de liaison (4, 4') étant entouré, au moins sur deux faces frontales (16, 16', 17, 17') mutuellement opposées, d'un élément d'amortissement (6, 6') réalisé dans la seconde matière plastique.

10. Guide linéaire ou rail télescopique (10), comprenant
un rail extérieur (11), un rail intérieur (14), une cage à corps de roulement (1) selon l'une des revendications précédentes et des corps de roulement (7) logés dans les évidements de retenue de corps de roulement (3),
le rail extérieur (11) et le rail intérieur (14) étant montés de manière à pouvoir se déplacer l'un par rapport à l'autre au moyen des corps de roulement (7) retenus par la cage à corps de roulement (1), une butée d'extrémité (13, 13') étant prévue à au moins une extrémité du rail extérieur (11), laquelle délimite la course de déplacement de la cage à corps de roulement (1) le long du rail extérieur (11) par butée de l'élément d'amortissement (6, 6') contre la butée d'extrémité (13, 13'),
une butée (15) étant prévue à au moins une extrémité du rail intérieur (14) orientée vers la butée d'extrémité (13, 13'), laquelle délimite la course de déplacement de la cage à corps de roulement (1) le long du rail intérieur (14) par butée de l'élément d'amortissement (6, 6') contre la butée (15) du rail intérieur (14).

11. Guide linéaire ou rail télescopique (10) selon la revendication précédente, **caractérisé en ce que** sont prévues aux deux extrémités du rail extérieur (11) des butées d'extrémité (13, 13'), aux deux extrémités du rail intérieur (14) des butées (15) et aux deux extrémités de la cage à corps de roulement (1) des ponts de liaison (4, 4') pourvus d'éléments d'amortissement (6, 6').
